# EUROPEAN PATENT APPLICATION

(11) **EP 1 503 556 A2**
(43) Date of publication of application: **02.02.2005**
(21) Application number: 04011777.2
(22) Date of filing: 18.05.2004
(51) Int. Cl.: H04L 27/26

(54) **ADSL modem apparatus and communication method thereof**

(30) Priority: 01.08.2003 JP 2003285424
(71) Applicant: MATSUSHITA ELECTRIC INDUSTRIAL CO., LTD., Kadoma-shi, Osaka 571-8501 (JP)
(72) Inventor: Noma, Nobuhiko, Yokohama-shi, Kangawa 227-0033 (JP); Takagi, Genzo, Ageo-shi, Saitama 362-0047 (JP); Nagai, Motoyoshi, Yokohama-shi, Kanagawa 247-0008 (JP); Araki, Mitsuhiro, Kiyose-shi, Tokyo 204-0023 (JP); Atsuta, Akira, Tokyo 153-0064 (JP)
(74) Representative: Grünecker, Kinkeldey, Stockmair & Schwanhäusser Anwaltssozietät

(57) **Abstract**

A processor of a transceiver estimates a communication distance to an opposing ADSL modem apparatus by detecting a reception level of a REVERB signal in accordance with the ITU-T regulated G.992.1 or G. 992.2. Based on the estimated communication distance, and by referring to a table showing attenuation of signal energy (stored in a RAM), the signal energy in a high frequency band (among the signal energy assigned to transmitting signals) is concentrated into a low frequency band during the communication.

## Description

### BACKGROUND OF THE INVENTION

### 1. Field of the Invention

The present invention relates to an ADSL modem apparatus an ADSL modem communication method.

### 2. Description of Related Art

The ADSL communication realizes a high-speed data communication between ADSL modem apparatuses that are installed to both center side (telephone exchange) and remote side (subscriber). However, the ADSL communication that uses a frequency band between 10kHz - 1 MkHz has limitations in distance, since the attenuation rate at a high frequency range is large, thereby affecting the signal communication.

In order to overcome such limitations, a technology has been disclosed that enables the signal communication distance to be extended (even with the large attenuation in the high frequency range). The extension method includes detecting gain characteristics of a signal received in accordance with an initialization sequence using the ADSL modem apparatuses of both center and remote sides, notifying each other of the gain characteristics, and correcting gain characteristics of transmitting signals in the future, based on the gain characteristics notified from the opposing side (e.g., Related Art 1).

### [Related Art 1]

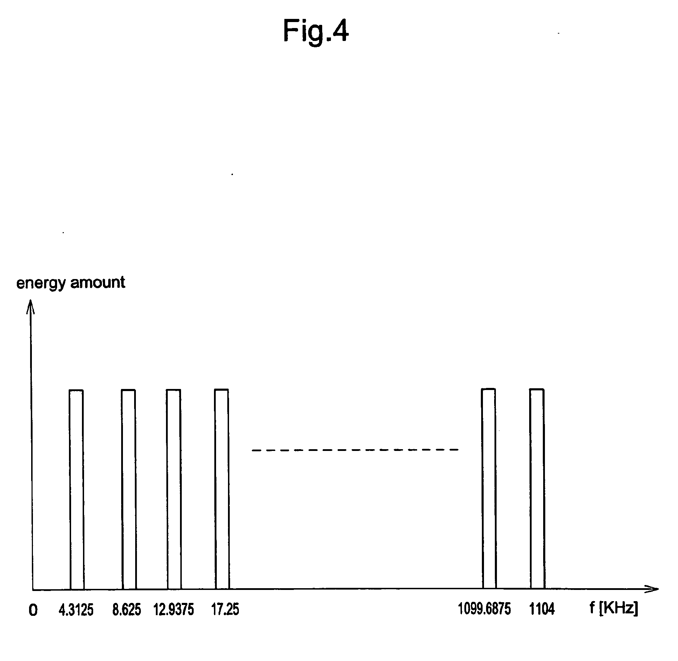

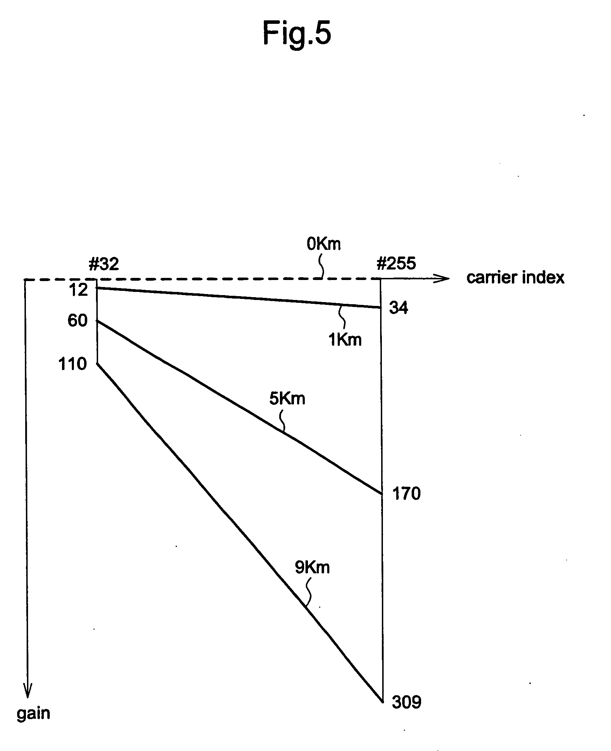

### Japanese Patent Laid Open Publication 2003-87352 (Figs. 4 and 5)

However, even with the above described conventional art, maximum transfer rate is decreased in long distance communication, due to the attenuation and noise. In a normal setting, the communication distance cannot be longer than several km (5.5 km at 1.5M bits/sec transfer; 1.8 km at 6M bits/sec transfer) from the center side (telephone exchange).

In addition to the need for a faster ADSL communication in the recent years, there is a high demand to use the ADSL communication in a longer distance than the conventionally available distance. However, when using the ADSL communication in a longer distance than the conventionally available distance, the communication distance to the opposing ADSL modem apparatus needs to be accurately detected, in order to prevent the high frequency attenuation according to the detected communication distance.

### SUMMARY OF THE INVENTION

The present invention addresses the above-identified problems. The purpose of the invention is to provide an ADSL modem apparatus and a communication method thereof that accurately detect the communication distance to the opposing ADSL modem apparatus and enable the ADSL communication in a longer distance than the conventionally available distance.

In the present invention, REVERB signals in accordance with the ITU-T regulated G. 992.1 or G. 992. 2 are exchanged. Based on the reception levels of a REVERB signal, the communication distance to the opposing ADSL modem apparatus is estimated. Then, the communication is performed by concentrating the signal energy of the high frequency band into to the low frequency band, according to the estimated communication distance.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 is a schematic diagram of a communication system at a remote side to which an ADSL modem apparatus is applied, according to an embodiment of the present invention;
Fig. 2 is a functional block diagram of a transceiver of Fig. 1;
Fig. 3 is a timing chart of an initialization sequence of the standard G. 992. 1;
Fig. 4 illustrates frequency characteristics of a REVERB signal;
Fig. 5 illustrates an amplitude spectrum of the REVERB signal when a communication distance is changed;
Fig. 6 illustrates an example of a table showing a relationship between a communication distance of the REVERB signal (of Fig. 5) and signal energy attenuation;
Fig. 7 is a flowchart illustrating a communication operation of the ADSL modem apparatus in the communication system at the remote side;
Fig. 8 is a flowchart illustrating a communication operation of the ADSL modem apparatus in the communication system at the remote side;
Fig. 9 is a flowchart illustrating a communication operation of the ADSL modem apparatus in the communication system at a center side;
Fig. 10 is a flowchart illustrating a communication operation of the ADSL modem apparatus in the communication system at the center side;
Fig. 11 illustrates an example of a PSD used in the current ADSL communication; and
Fig. 12 illustrates a signal energy used in a provided PSD in accordance with the communication distance to an opposing ADSL modem apparatus, the signal energy being used by the ADSL modem apparatus according to the embodiment of the present invention.

### DETAILED DESCRIPTION OF PREFERRED EMBODIMENTS

The embodiments of the present invention are explained in the following, in reference to the above-described drawings.

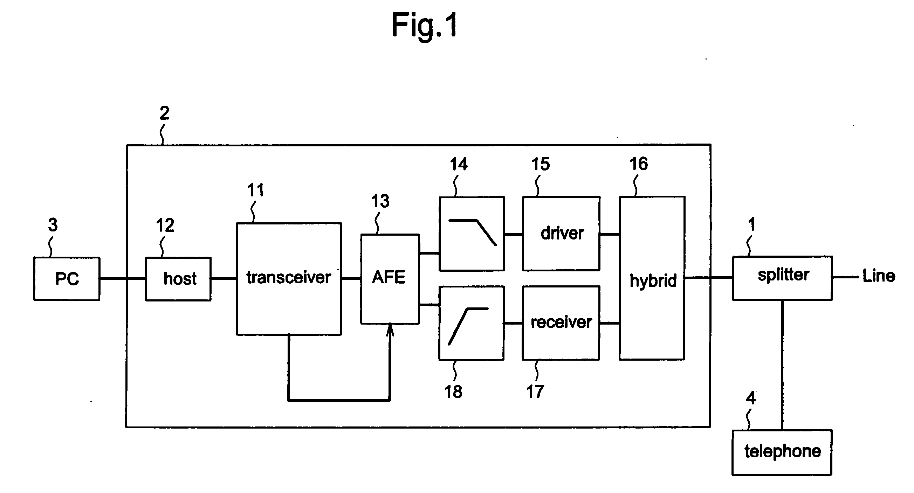

Fig. 1 is a schematic diagram of a communication system at a remote side (ATU-R) to which an ADSL modem apparatus is applied, according to an embodiment of the present invention. In the communication system as illustrated in Fig. 1, a public phone line or a similar phone line (hereafter referred to as line) is connected to ADSL modem apparatus 2 via splitter 1. Further, user terminal 3 is connected to ADSL modem apparatus 2. When user terminal 3 and telephone 4 share one line, splitter 1 is necessary. However, when telephone 4 is not used, splitter 1 is not needed. It is also possible to have a configuration where user terminal 3 intemally installs ADSL modem apparatus 2.

ADSL modem apparatus 2 includes transceiver 11 that executes the handshake and initialization sequences, and host 12 that controls the entire operation including the one of transceiver 11. At the line side of transceiver 11, units are configured with an analog circuit via an analog front end (hereafter referred to as AFE). Driver 15 is connected to a DA converter of AFE 13 via analog filter 14, so that an analog signal amplified by driver 15 is transmitted to the line via hybrid 16. The analog signal transmitted from the line is received by receiver 17 via hybrid 16, and then input into an AD converter of AFE 13 via analog filter 18. When sampling data is output from the AD converter, AFE 13 outputs the data to transceiver 11.

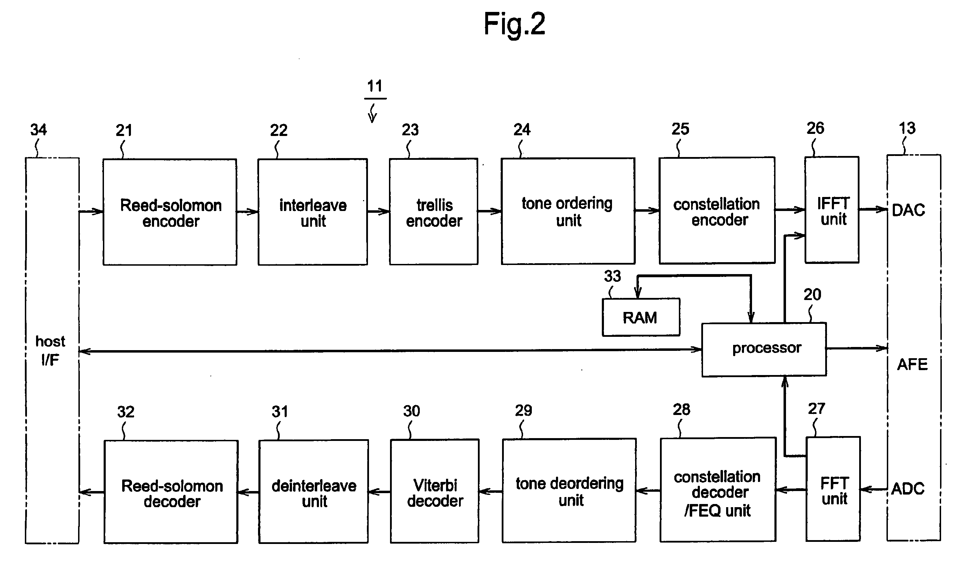

Fig. 2 is a functional block diagram illustrating transceiver 11. Processor 20 has a function to execute the handshake sequence prior to initiating data transmission (SHOWTIME).

The transmission side of transceiver 11 includes Reed-Solomon encoder 21 that adds a redundancy bit for checking error, interleave unit 22 that sorts data to enable a burst error correction during Reed-Solomon decoding, trellis encoder 23 that performs data convolution from a trellis encoding, tone ordering unit 24 that lays out a bit number for each carrier, constellation encoder 25 that allocates topology of the transmission data on constellation coordinates, and IFFT unit 26 that performs an Inverse Fast Fourier Transform (hereafter referred to as IFFT) on data after the constellation encoding process.

The reception process side of transceiver 11 includes FFT unit 27 that performs a Fast Fourier Transform (hereafter referred to as FFT) on sampling data of the received signal, constellation decoder/FEQ unit 28 that decodes data from constellation data of the FFT output signal and corrects a topology on the constellation coordinates, tone de-ordering unit 29 that restores data laid out to each carrier after tone ordering process at the transmission side, Viterbi decoder 30 that performs Viterbi decoding on the received data, de-interleave unit 31 that restores data being resorted by the transmission side, and Reed-Solomon decoder 32 that deletes the redundancy bit added by the transmission side. RAM 33 is a work area of processor 20, which will be used for executing handshake and initialization sequences. In addition, RAM 33 includes a carrier table (later described). Transceiver 11 is connected to host 12 via host interface (I/F) 34.

An ADSL modem apparatus at the center side (ATU-C) is connected to ADSL modem apparatus 2 via a metallic cable. The ADSL modem apparatus at the center side has the same configuration as ADSL modem apparatus 2. Hereafter, the identical numeric character (2) is applied to the ADSL modem apparatus at the center side. Telephone 4 is not included when the center side is an exchange set by a communication industry.

Processor 20 of ADSL modem apparatuses 2 of the remote and center sides, having the above configuration, estimates the communication distance to the opposing ADSL modem apparatus based on the REVERB signal transmitted during the initialization sequence according to the ITU-T regulated G. 992. 1 or G. 992. 2. When the communication distance is detected, PSD (Power Spectral Density) is modified to perform xDSL communication. In particular, according to the communication distance estimated by both sides of ADSL modem apparatuses 2, the distance being calculated based on the reception level of the REVERB signal transmitted during the initialization sequence, a spectrum of the communication signal is concentrated into the low frequency band to perform the xDSL communication.

Hereafter, the illustration is provided for the REVERB signal that is used by ADSL modem apparatus 2, according to the present embodiment, to estimate the communication distance. The REVERB signal is configured to be handled in various situations within the standard G. 992. 1 (G.DMT) or G. 992. 2 (G.lite).

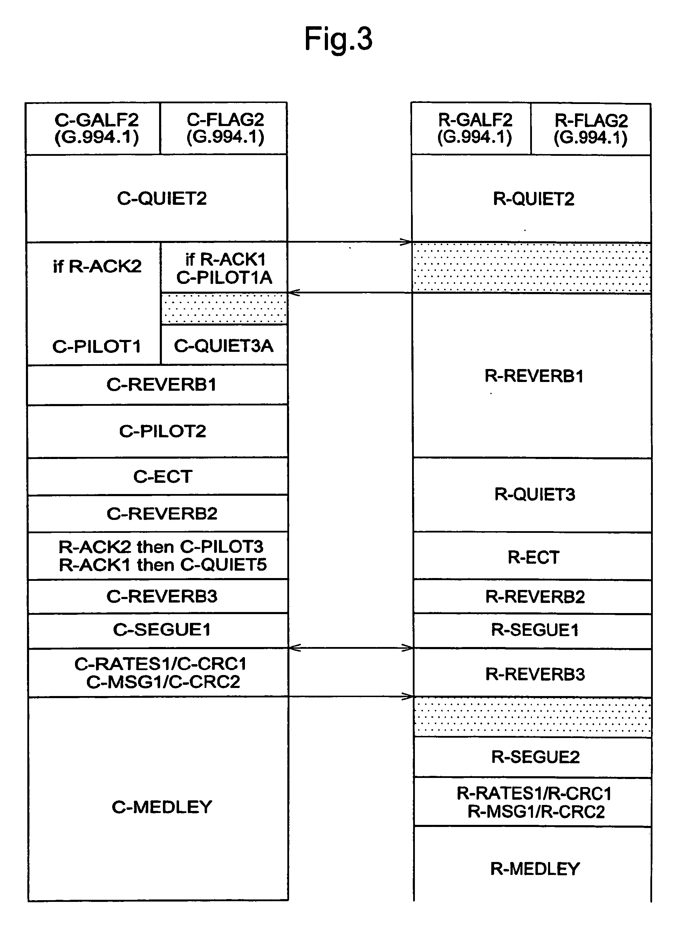

Fig. 3 is a timing chart illustrating an initialization sequence of G. 992. 1. In Fig. 3, the left hand side illustrates ADSL modem apparatus 2 of the center side (ATU-C), while the right hand side illustrates ADSL modem apparatus 2 of the remote side (ATU-R). As illustrated in the figure, the REVERB signal is exchanged three times (C/R-REVERB1-3) between the center and remote side ADSL modem apparatuses 2 during the initialization sequence.

Fig. 4 illustrates frequency characteristics of the REVERB signal. In Fig. 4, the horizontal axis illustrates frequency (f/kHz) while the vertical axis illustrates energy (G/dB). Fig. 4 illustrates the frequency characteristics when the REVERB signal is detected by a detector such as a spectrum analyzer.

As shown in the figure, the REVERB signal is provided with the frequency characteristics having the same signal energy amount applied to each carrier (plurality of carriers), which is arranged at every 4.3125kHz period up to 1,104kHz. Since the plurality of carriers are arranged at every 4.3125kHz period, the REVERB signal has the comb-shaped frequency characteristics. In addition, data is not applied to the REVERB signal. The REVERB signal is configured only with signal energy.

Fig. 5 illustrates an amplitude spectrum of the REVERB signal when a communication distance is changed. In Fig. 5, the horizontal axis illustrates carrier indexes and the vertical axis illustrates signal energy attenuation. Specifically, Fig. 5 illustrates the amplitude spectrum of carrier indexes #32 - #255 (of the REVERB signal), at communication distances 0km, 1km, 5km, and 9km.

As shown in the figure, as the carrier index increases, the signal energy attenuation becomes larger. Also, as the communication distance increases, the signal energy attenuation becomes larger. To be specific, at communication distance 1km, signal energy attenuation of 12dB for carrier index #32, and of 34dB for carrier index #255 is shown. Similarly, at communication distance 5km, signal energy attenuation of 60dB for carrier index #32, and of 170dB for carrier index #255 is shown. At communication distance 9km, signal energy attenuation of 110dB for carrier index #32, and of 309dB for carrier index #255 is shown. When the communication distance is at 0km, there is no signal energy attenuation.

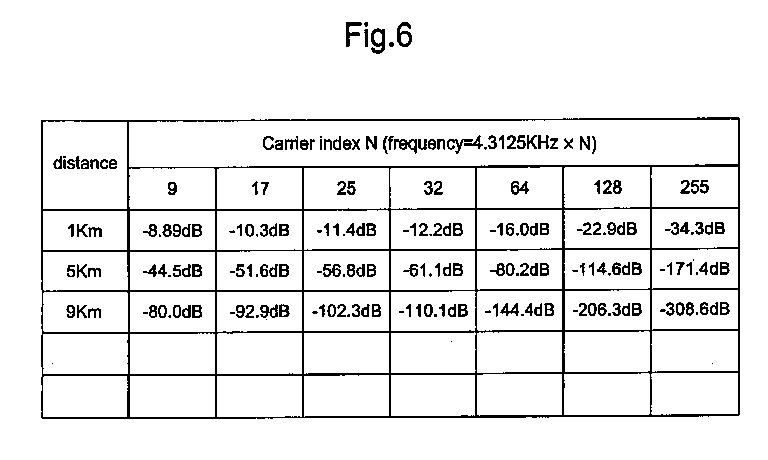

Fig. 6 illustrates a table illustrating a relationship between a communication distance (of Fig. 5) and signal energy attenuation. As shown in Fig. 6, signal energy attenuation amount is registered at specific carrier indexes. In particular, signal energy attenuation amount is registered at carrier indexes #9, #17, #25, #32, #64, #128, and #255. In this embodiment, RAM 33 stores such a table. These characteristics of the signal energy attenuation are used to estimate the communication distance to the opposing ADSL modem apparatus 2.

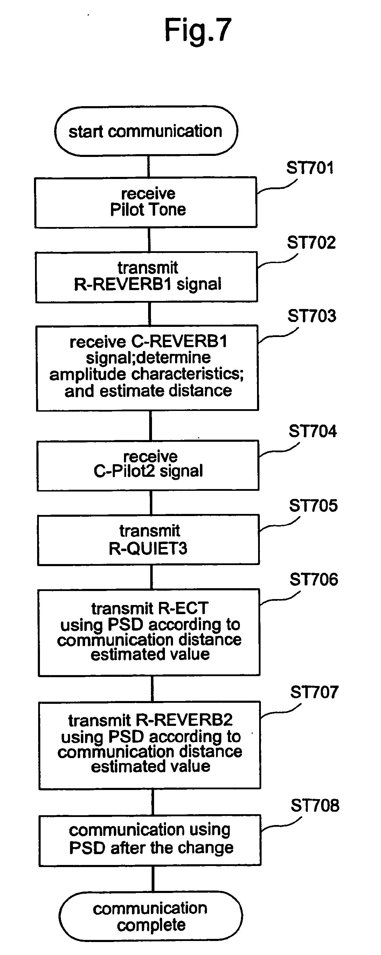

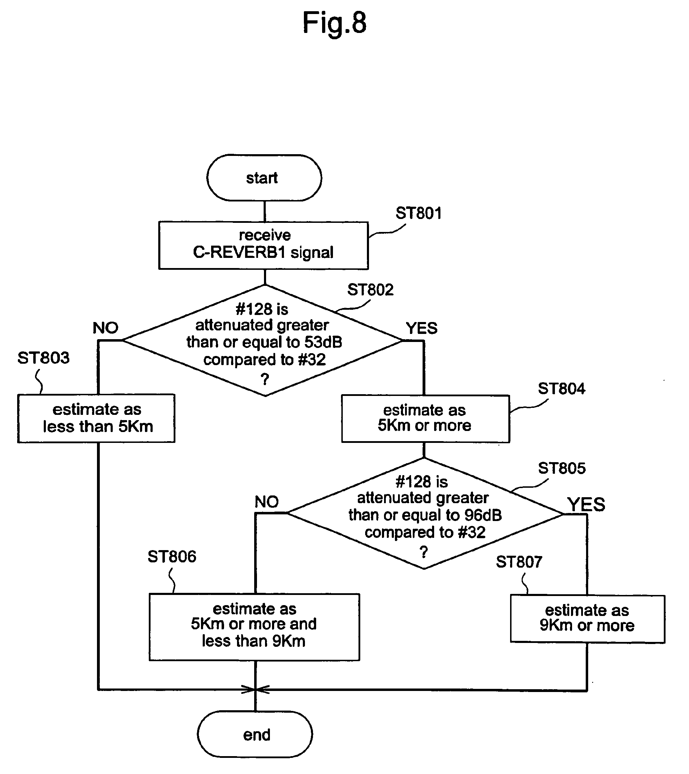

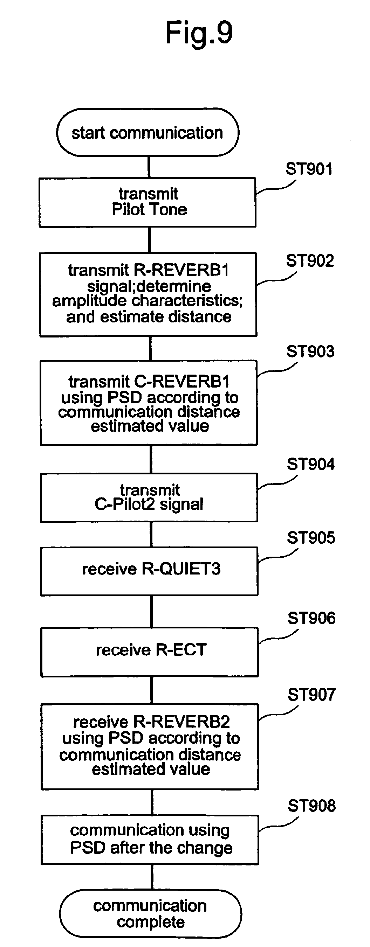

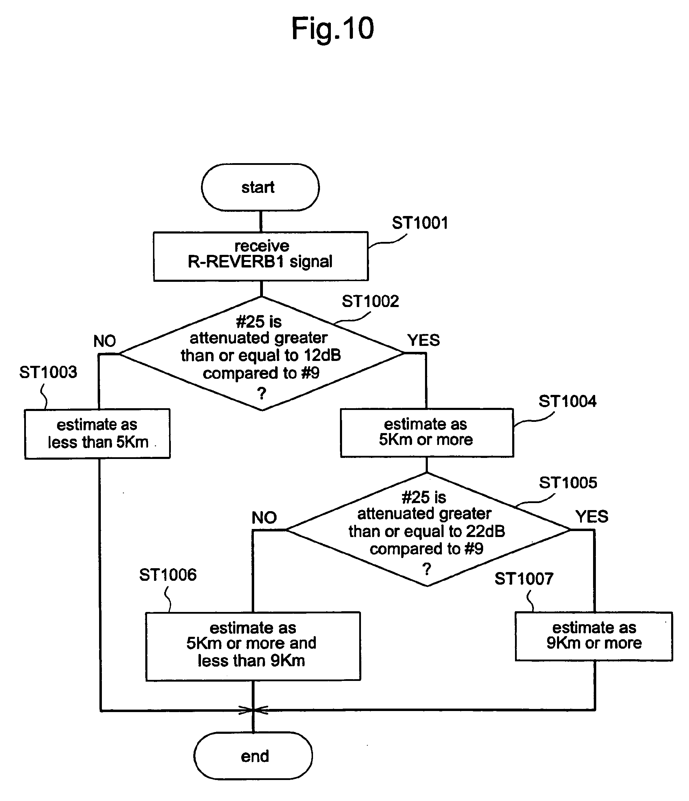

The following illustrates the communication operation of ADSL modem apparatus 2 having the above configuration. Figs. 7 and 8 are flowcharts illustrating the communication operation of ADSL modem apparatus 2 at the communication system of the remote side (hereafter referred to as remote side ADSL modem apparatus 2). Figs. 9 and 10 are flowcharts illustrating the communication operation of ADSL modem apparatus 2 at the communication system of the center side (hereafter referred to as enter side ADSL modem apparatus 2).

As shown in Fig. 7, remote side ADSL modem apparatus 2 receives a PilotTone, upon starting the communication, the PilotTone being transmitted from the center side ADSL modem apparatus 2 (ST 701). The PilotTone is transmitted by the center side ADSL modem apparatus 2, using the frequency of 276kHz, in order to fine tone the frequency between the two ADSL modem apparatuses 2.

Upon receiving the PilotTone, the remote side ADSL modem apparatus 2 transmits a R-REVERB1 signal (ST 702). In response, the center side ADSL modem apparatus 2 transmits a C-REVERB1 signal, which is received by the remote side ADSL modem apparatus 2 (ST 703).

At this time, the remote side ADSL modem apparatus 2 detects amplitude characteristics of the C-REVERB 1 signal and estimates the communication distance to the center side ADSL modem apparatus 2. The remote side ADSL modem apparatus 2 compares the reception level of specific two carriers (among a plurality of carriers) and estimates the communication distance to the opposing ADSL modem apparatus 2.

Fig. 8 is a flowchart illustrating how the remote side ADSL modem apparatus 2 estimates the communication distance. As shown in Fig. 8, upon receiving the C-REVERB1 signal (ST 801 ), the remote side ADSL modem apparatus 2 estimates the communication distance by comparing the reception levels of carrier indexes #32 and #128. In particular, the communication distance is estimated by determining how much more the signal energy of carrier index #128 is attenuated, compared to the one of carrier index #32. At this time, the remote side ADSL modem apparatus 2 checks the table stored in RAM 33.

First, it is determined whether the signal energy of carrier index #128 is attenuated greater than or equal to 53dB, compared to the signal energy of carrier index #32 (ST 802). When the difference in attenuation amount is smaller than 53dB, the communication distance is estimated to be smaller than 5km, the determination being made from the data registered in the table of RAM 33 (ST 803). When the difference in attenuation amount is greater than or equal to 53dB, the communication distance is estimated to be greater than or equal to 5km (ST 804).

Next, it is determined whether the signal energy of carrier index #128 is attenuated greater than or equal to 96dB, compared to the signal energy of carrier index #32 (ST 805). When the difference in attenuation amount is smaller than 96dB, the communication distance is estimated to be greater than or equal to 5km and smaller than 9km (ST 806). When the difference in attenuation amount is greater than or equal to 96dB, the communication distance is estimated to be greater than or equal to 9km (ST 807).

After the communication distance is estimated by the above process, the remote side ADSL modem apparatus 2 receives a C-Pilot2 signal transmitted by the center side ADSL modem apparatus 2 (ST 704). In response, the remote side ADSL modem apparatus 2 transmits R-QUIET3 (ST 705). Upon transmitting the R-QUIET3, the remote side ADSL modem apparatus 2 transmits a R-ECT using the PSD that is modified in accordance with the communication distance estimated at ST 703 (hereafter referred to as communication distance estimated value) (ST 706). Following the R-ECT, a R-REVERB2 is transmitted using the PSD modified in accordance with the communication distance estimated value (ST 707).

Then, the remote side ADSL modem apparatus 2 performs xDSL communication using the PSD modified based on the communication distance estimated value (ST 708). When the data for the communication is transmitted, the communication is completed. The modification of the PSD is later described.

The center side ADSL modem apparatus 2 operates corresponding to the operation of the remote side ADSL modem apparatus 2. In particular, as shown in Fig. 9, the center side ADSL modem apparatus 2 transmits a PilotTone to the remote side ADSL modem apparatus 2 (ST 901). In response, the remote side ADSL modem apparatus 2 transmits a R-REVERB 1 signal, which is received by the center side ADSL modem apparatus 2 (ST 902).

At this time, the center side ADSL modem apparatus 2 detects the amplitude characteristics of the R-REVERB 1 signal and estimates the communication distance to the remote side ADSL modem apparatus 2. Similar to the remote side ADSL modem apparatus 2, the center side ADSL modem apparatus 2 compares the reception level of specific two carriers (among a plurality of carriers) and estimates the communication distance to the opposing ADSL modem apparatus 2.

Fig. 10 is a flowchart illustrating how the center side ADSL modem apparatus 2 estimates the communication distance. As shown in Fig. 10, upon receiving the R-REVERB 1 signal (ST 1001), the center side ADSL modem apparatus 2 estimates the communication distance by comparing the reception levels of carrier indexes #9 and #25. In particular, the communication distance is estimated by determining how much more the signal energy of carrier index #25 is attenuated, compared to the one of carrier index #9. At this time, the center side ADSL modem apparatus 2 checks the table stored in RAM 33.

First, it is determined whether the signal energy of carrier index #25 is attenuated greater than or equal to 12dB, compared to the signal energy of carrier index #9 (ST 1002). When the difference in attenuation amount is smaller than 12dB, the communication distance is estimated to be smaller than 5km, the determination being made from the data registered in the table of RAM 33 (ST 1003). When the difference in attenuation amount is greater than or equal to 12dB, the communication distance is estimated to be greater than or equal to 5km (ST 1004).

Next, it is determined whether the signal energy of carrier index #25 is attenuated greater than or equal to 22dB, compared to the signal energy of carrier index #9 (ST 1005). When the difference in attenuation amount is smaller than 22dB, the communication distance is estimated to be greater than or equal to 5km and smaller than 9km (ST 1006). When the difference in attenuation amount is greater than or equal to 22dB, the communication distance is estimated to be greater than or equal to 9km (ST 1007).

After the communication distance is estimated by the above process, the center side ADSL modem apparatus 2 transmits the C-REVERB signal using the PSD modified in accordance with the communication distance estimated value (ST 903). Subsequently, the center side ADSL modem apparatus 2 transmits a C-Pilot2 signal to the remote side ADSL modem apparatus 2 (ST 904). In response, the remote side ADSL modem apparatus 2 transmits R-QUIET3 and R-ECT signals, which are received by the center side ADSL modem apparatus 2 (ST 905 and ST 906).

Further, the center side ADSL modem apparatus 2 receives an R-REVERB2 signal, transmitted by the remote side ADSL modem apparatus 2, using the PSD modified in accordance with the communication distance estimated value (ST 907). Then, the center side ADSL modem apparatus 2 performs xDSL communication using the PSD modified based on the communication distance estimated value (ST 908). When the data for the communication is transmitted, the communication is completed.

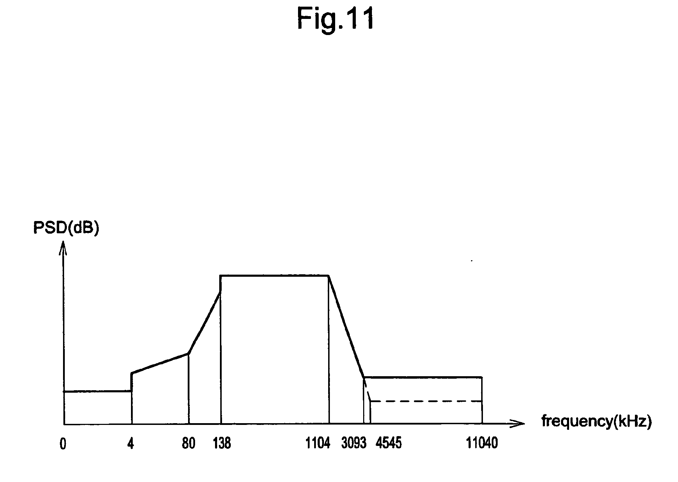

The following illustrates a process where the PSD is modified when center and the remote side ADSL modem apparatuses 2 performs the xDSL communication. PSD is a density of the signal energy that is assigned to a communication signal. Fig. 11 illustrates an example of the PSD normally used in the downstream line of the current ADSL communication. In Fig. 11, the horizontal axis illustrates frequency, while the vertical axis illustrates the signal energy assigned to the sender ADSL modem apparatus 2.

As shown in Fig. 11, the downstream line of the current ADSL communication sets a peak of the signal energy from 138kHz - 1104kHz for the data communication. Hereafter, the frequency band used for the data communication is referred to as data communication band. However, when the communication distance is increased, the signal energy in a high frequency band (within the data communication band) becomes largely attenuated. Therefore, ADSL modem apparatus 2 according to the embodiment of the present invention concentrates the signal energy (originally assigned in the high frequency band) into the low frequency band, without changing the total amount of the signal energy in the data communication band. Thus, the communication is performed in a state where the peak of the signal energy is raised in the low frequency band.

Especially in the present embodiment, there are three kinds of PSDs that concentrate the signal energy of the data communication band into the low frequency band, according to the communication distance to the opposing ADSL modem apparatus 2. In particular, the embodiment provides the PSDs that concentrate the signal energy of the data communication band into the low frequency band, according to the communication distances of 1km, 5km, and 9km to the opposing ADSL modem apparatus 2. ADSL modem apparatus 2 according to the embodiment performs xDSL communication by choosing one of the PSDs according to the communication distance estimated from the REVERB signal exchanged during the initialization sequence, thereby enabling the communication that suppresses the effects of signal energy attenuation due to the communication distance.

In the above example, modification of the PSDs is illustrated for the data communication band in the downstream line of the current ADSL communication. However, the same applies to the upstream line providing PSDs that concentrate the signal energy of the data communication band into the low frequency band, according to the communication distances of 1km, 5km, and 9km to the opposing ADSL modem apparatus 2. Then, xDSL communication is performed by choosing one of the PSDs according to the communication distance estimated from the REVERB signal exchanged during the initialization sequence.

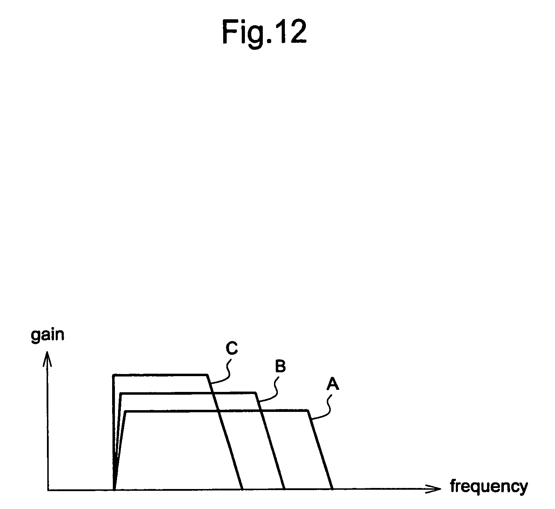

Fig. 12 illustrates the signal energy used in a provided PSD in accordance with the communication distance to an opposing ADSL modem apparatus, in ADSL modem apparatus 2 according to the embodiment of the present invention. In Fig. 12, the horizontal axis illustrates frequency and the vertical axis illustrates the signal energy assigned by the sender ADSL modem apparatus 2.

Signal energy A shown in Fig. 12 illustrates the signal energy of the selected PSD when the communication distance to the opposing ADSL modem apparatus 2 is estimated to be 1 km. Similarly, signal energy B and C, shown in the figure, respectively illustrate the signal energy of the selected PSD when the communication distances to the opposing ADSL modem apparatus 2 are estimated to be 5km and 9km.

As shown in signal energy A of the figure, the signal energy of the high frequency band (within the data communication band) is not concentrated into the low frequency band, since the signal energy attenuation is smaller in the relatively short communication distance (1km). As shown in signal energy B of the figure, the signal energy of the high frequency band (within the data communication band) is slightly concentrated into the low frequency band, since the signal energy attenuation is large in the relatively long communication distance (5km). Further, as shown in signal energy C of the figure, the signal energy of the high frequency band (within the data communication band) is largely concentrated into the low frequency band, since the signal energy attenuation is much larger in the extremely long communication distance (9km).

According to ADSL modem apparatus 2 of the embodiment of the present invention, an appropriate PSD is selected based on the estimated communication distance, the distance being calculated from the signal energy attenuation of the REVERB signal, the signal being exchanged according to the initialization protocol. In other words, xDSL communication is performed by concentrating the signal energy of the high frequency band (within the data communication band) into the low frequency band. Accordingly, the communication is performed by using the low frequency band, where there is less attenuation regardless of the communication distance, thereby enabling the ADSL communication to be performed beyond the conventional limitation in the communication distance.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above-described embodiments, and various variations and modifications may be possible without departing from the scope of the present invention.

This application is based on the Japanese Patent Application No. 2003-285424 filed on August 1, 2003, entire content of which is expressly incorporated by reference herein.

## Claims

1. An ADSL modem apparatus comprising:
an exchange unit that transmits and receives a REVERB signal according to one of the ITU-T standard G.992.1 and G.992.2; and
an estimation unit that estimates a communication distance to an opposing ADSL modem apparatus according to a reception level of the REVERB signal.

2. The ADSL modem apparatus according to claim 1, wherein said estimation unit estimates the communication distance to the opposing ADSL modem apparatus by comparing reception levels of two carriers, the carriers being selected from a plurality of carriers that configure the REVERB signal.

3. The ADSL modem apparatus according to claim 1, further comprising:
a communication unit that communicates by concentrating signal energy into a low frequency band, the signal energy being assigned to a transmission signal according to the communication distance estimated by said estimation unit.

4. The ADSL modem apparatus according to claim 3, wherein said communication unit minimizes the signal energy assigned to a high frequency band and increases the signal energy assigned to the low frequency band, when the communication distance to the opposing ADSL modem apparatus is increased.

5. The ADSL modem apparatus according to claim 1, wherein the ADSL modem apparatus is located at a remote side, and wherein the communication distance between the remote side ADSL modem apparatus and a center side ADSL modem apparatus is estimated.

6. The ADSL modem apparatus according to claim 1, wherein the ADSL modem apparatus is located at a center side, and wherein the communication distance between the center side ADSL modem apparatus and a remote side ADSL modem apparatus is estimated.

7. A communication method for an ADSL modem apparatus, the method comprising:
receiving a REVERB signal according to one of the ITU-T standard G.992.1 and G.992.2;
estimating a communication distance to an opposing ADSL modem apparatus according to a reception level of the REVERB signal; and
concentrating signal energy into a low frequency band, the signal energy being assigned to a transmission signal according to the estimated communication distance.

8. The communication method for an ADSL modem apparatus according to claim 7, the method further comprising:
minimizing the signal energy assigned to a high frequency band and increasing the signal energy assigned to the low frequency band, when the communication distance to the opposing ADSL modem apparatus is increased.
